# FASCICULE DE BREVET EUROPEEN

(11) **EP 2 354 007 B1**
(45) Date de publication et mention de la délivrance du brevet: **19.10.2016**
(21) Numéro de dépôt: 10196228.0
(22) Date de dépôt: 21.12.2010
(51) Int. Cl.: B64G 1/24, G05D 1/08, B64G 1/26

(54) **Procédé et dispositif d'optimisation de la masse d'un satellite**
Verfahren und Vorrichtung zum Optimieren der Masse eines Satelliten
Method and device for optimizing the mass of a satellite

(30) Priorité: 19.01.2010 FR 1000201
(43) Date de publication de la demande: 10.08.2011
(73) Titulaire: Thales, 92400 Courbevoie (FR)
(72) Inventeur: Martinot, Vincent, 31270, Villeneuve-Tolosane (FR); Fratacci, Olivier, 06130, Grasse (FR); Sainct, Hervé, 06110, Le Cannet (FR)
(74) Mandataire: Esselin, Sophie

(56) Documents cités:
- JP-A- 4 349 097
- US-B1- 6 464 174

## Description

L'invention concerne le domaine des missions spatiales et, plus particulièrement, l'optimisation de la masse de satellites destinés à des missions comportant des phases d'orbite autour de corps massifs.

Les futurs programmes spatiaux prévoient d'envoyer des satellites sur des orbites hautement elliptiques comme orbite de capture éventuellement pour libérer un atterrisseur immédiatement après la capture ou après un certain temps passé sur cette orbite de capture. Sur de telles orbites, étant données certaines conditions géométriques, des éclipses de longue durée peuvent se produire. Durant ces éclipses, le satellite est privé de l'énergie solaire. Les sous-systèmes assurant l'alimentation et la régulation thermique du satellite doivent alors être suffisamment dimensionnés pour pouvoir fonctionner pendant la durée de ces éclipses.

Généralement, les trajectoires d'insertion conduisant à de longues éclipses ne sont pas utilisées parce qu'elles conduisent à une augmentation du poids des sous-systèmes assurant l'alimentation et la régulation thermique. Cependant dans le cas où un atterrissage est initié depuis l'orbite de capture, cela peut empêcher un atterrissage dans de bonnes conditions (par exemple éclairé par le soleil) pour une latitude donnée. Ce problème est d'autant plus probable lorsque l'atterrissage n'est pas réalisé immédiatement mais après un certain temps passé sur l'orbite de capture pour éviter des conditions d'atterrissage défavorables (par exemple les périodes de tempêtes de sables sur Mars ou des conjonctions entre la planète et la Terre).

Dans un contexte de contrainte de non modification de la forme de l'orbite (afin par exemple de garder des manoeuvres de désorbitation réduites), la solution de passer sur une orbite circulaire à basse altitude n'est pas envisageable. Une solution possible consiste cependant à augmenter la capacité et donc la taille et le poids des batteries embarquées à bord de l'engin spatial. Cette solution n'est pas entièrement satisfaisante car les batteries représentent alors une masse importante venant en concurrence de la masse de la charge utile et/ou occupent alors une place trop importante à bord de l'engin. De plus pour des éclipses particulièrement longue, cette solution peut ne pas être suffisante.

On connaît déjà par le document JP 04349097 un satellite artificiel permettant d'éviter des zones d'éclipse solaire sans recours à un mécanisme de rotation complexe.

On connaît aussi par le document US 6,464,174 une méthode pour contrôler un engin spatial permettant de transférer cet engin depuis une première orbite vers une seconde orbite, la seconde orbite étant à une altitude différente de la première orbite.

L'invention vise notamment à pallier le problème cité précédemment en proposant un procédé et un dispositif pour l'optimisation de la masse d'un satellite destiné à une mission comportant une phase d'orbite autour d'un corps massif prenant en compte le problème des éclipses de longues durées.

A cet effet, l'invention a pour objet un procédé pour l'optimisation de la masse d'un satellite destiné à une mission comportant une phase d'orbite autour d'un corps massif le long d'une première orbite elliptique dont la forme et l'orientation sont contraintes par une autre phase de la mission, la première orbite comportant un premier point appelé périapside et un deuxième point appelé apoapside, et étant associée à une première durée d'éclipse maximale, nécessitant une première masse de batterie permettant de maintenir le satellite en fonctionnement pendant la première durée d'éclipse maximale, ledit procédé étant caractérisé en ce qu'il comporte :
- une étape de calcul d'une seconde orbite elliptique obtenue par rotation de la première orbite autour d'un axe reliant la périapside et l'apoapside, la deuxième orbite elliptique étant associée à une deuxième durée d'éclipse maximale inférieure à la première durée d'éclipse maximale,
- une étape de détermination d'une manoeuvre permettant au satellite de rejoindre la seconde orbite, et
- une étape de calcul d'une deuxième masse de batterie permettant de maintenir le satellite en fonctionnement pendant la deuxième durée d'éclipse maximale, et de calcul d'une masse de carburant nécessaire pour effectuer la manoeuvre,
- l'ajout de la masse de carburant au satellite et le retrait d'une masse de batterie équivalente à la différence entre la première et la deuxième masse de batterie, la somme de la masse de carburant et de la deuxième masse de batterie étant inférieure la première masse de batterie.

L'invention a pour avantage d'éviter de surdimensionner les sous-systèmes assurant l'alimentation et la régulation thermique du satellite pour une longue éclipse qui n'a lieu qu'au cours d'une phase relativement courte de la mission, la mission durant plusieurs mois et l'éclipse durant quelques heures.

Ceci permet d'optimiser la conception du satellite en échangeant la masse nécessaire à la survie du satellite lors d'une longue éclipse par la masse de carburant nécessaire pour effectuer une manoeuvre de changement d'orbite. La masse ainsi économisée peut être utilisée par exemple pour d'autres applications scientifiques.

Avantageusement, l'étape de mise en oeuvre de la manoeuvre est réalisée aux abords de l'apoapside. La vitesse du satellite étant limitée sur cette portion de l'orbite, la masse de carburant nécessaire pour effectuer cette manoeuvre se trouve ainsi sensiblement réduite.

L'invention concerne aussi un dispositif pour l'optimisation de la masse d'un satellite destiné à une mission comportant une phase d'orbite autour d'un corps massif le long d'une première orbite elliptique dont la forme et l'orientation sont contraintes par une autre phase de la mission, la première orbite comportant un premier point appelé périapside et un deuxième point appelé apoapside, et étant associée à une première durée d'éclipse maximale, nécessitant une première masse de batterie permettant de maintenir le satellite en fonctionnement pendant ladite première durée d'éclipse maximale, ledit dispositif étant caractérisé en ce qu'il comporte :
- des moyens pour le calcul d'une seconde orbite elliptique obtenue par rotation de la première orbite autour d'un axe reliant la périapside et l'apoapside, la seconde orbite elliptique étant associée à une seconde durée d'éclipse maximale inférieure à la première durée d'éclipse maximale,
- des moyens pour la détermination d'une manoeuvre permettant au satellite de rejoindre la seconde orbite, et
- des moyens pour le calcul d'une deuxième masse de batterie permettant de maintenir le satellite en fonctionnement pendant la deuxième durée d'éclipse maximale, et de calcul d'une masse de carburant nécessaire pour effectuer la manoeuvre, la masse de carburant étant ajouté au satellite et une masse de batterie équivalente à la différence entre la première et la deuxième masse de batterie étant retirée du satellite, la somme de la masse de carburant et de la deuxième masse de batterie étant inférieure la première masse de batterie.

L'invention sera mieux comprise et d'autres avantages apparaîtront à la lecture de la description détaillée faite à titre d'exemple non limitatif et à l'aide des figures parmi lesquelles :
La figure 1 représente un engin spatial en orbite autour d'un corps massif.
La figure 2 représente un diagramme du procédé selon l'invention.
La figure 3 représente un exemple de mise en oeuvre du dispositif selon l'invention.
La figure 4 représente un exemple d'une éclipse de longue durée.

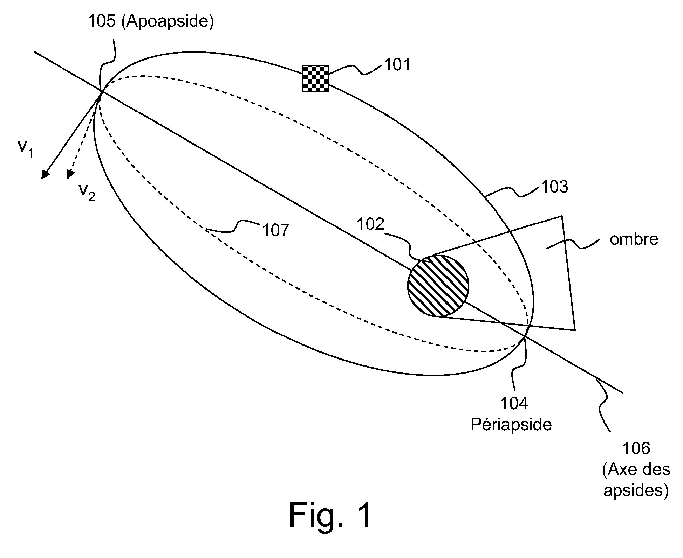

La figure 1 présente un engin spatial 101 en orbite autour d'un corps massif 102. Le corps massif est par exemple une planète ou une lune. L'engin spatial est par exemple un satellite ou un engin destiné à larguer un atterrisseur . L'engin spatial suit une orbite initiale 103 qui est elliptique. On rappelle qu'une orbite elliptique comporte deux points remarquables appelés apsides : le premier, le périapside 104, est le point de l'orbite 103 où la distance est minimale par rapport au corps massif 102; le second, l'apoapside 105, est le point de l'orbite 103 où la distance est maximale par rapport au corps massif 102. L'axe 106 reliant le périapside 104 et l'apoapside 105 est appelé axe des apsides.

L'engin spatial en suivant l'orbite initiale va rencontrer une éclipse de longue durée due à des conditions géométriques défavorables résultant de la rotation apparente du soleil autour du corps massif et éventuellement de perturbations orbitales (perturbations gravitationnelles du corps massif ou d'autres corps).

La solution de l'invention consiste à effectuer une manoeuvre avant que ces conditions géométriques ne soient remplies. Cette manoeuvre a pour but de réaliser une rotation du plan orbital (le plan de l'ellipse) autour de l'axe des apsides 106. La vitesse de l'engin sur l'orbite initiale est définie par un premier vecteur vitesse v₁. La manoeuvre ne modifie par la valeur du premier vecteur v₁. En revanche, elle modifie sa direction dans un plan perpendiculaire à l'axe des apsides 106 de façon obtenir un second vecteur vitesse v2. La première orbite elliptique 103 est associée à une première durée d'éclipse maximale D1.

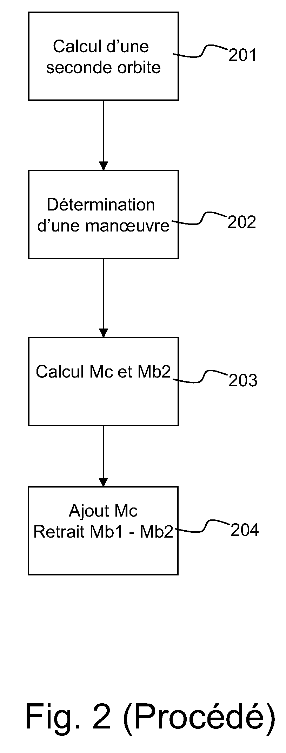

La figure 2 représente un diagramme du procédé selon l'invention. Le procédé comporte :
- une étape 201 de calcul d'une seconde orbite 107 elliptique obtenue par rotation de la première orbite 103 autour d'un axe 106 reliant la périapside 104 et l'apoapside 105, la deuxième orbite elliptique 107 étant associée à une deuxième durée d'éclipse maximale D2 inférieure à la première durée d'éclipse maximale D1,
- une étape 202 de détermination d'une manoeuvre permettant au satellite de rejoindre la seconde orbite 107, et
- une étape de calcul 203 d'une deuxième masse de batterie Mb2 permettant de maintenir le satellite en fonctionnement pendant la deuxième durée d'éclipse maximale D2, et de calcul d'une masse de carburant Mc nécessaire pour effectuer la manoeuvre,
- l'ajout de la masse Mc de carburant au satellite et le retrait d'une masse de batterie équivalente à la différence entre la première Mb1 et la deuxième masse Mb2 de batterie, la somme de la masse Mc de carburant et de la deuxième masse Mb2 de batterie étant inférieure la première Mb1 masse de batterie.

La seconde orbite elliptique 107 est déterminée de façon à respecter les conditions suivantes: (i) la seconde orbite elliptique 103 possède la même apoapside 105 et la même périapside 104 que la première orbite, (ii) la durée d'éclipse maximale D2 de la seconde orbite (c'est-à-dire dire la durée maximale pendant laquelle le satellite parcourant cette orbite ne reçoit pas la lumière du soleil) est inférieure la durée d'éclipse maximale D1 de la première orbite. La différence D entre la première durée d'éclipse maximale D1 et la seconde durée d'éclipse maximale D2 permet de calculer une masse de batterie Mb. Cette masse de batterie Mb représente la quantité de batterie nécessaire pour maintenir le satellite en fonctionnement pendant la différence de durée D.

D'autre part, on peut déterminer une masse Mc de carburant nécessaire à la réalisation la manoeuvre permettant au satellite de rejoindre la seconde orbite 107.

La masse Mc de carburant est inférieure à la masse de batterie Mb.

Cette solution résout le problème des éclipses de longues durée et à pour avantage de réduire la masse du satellite.

Avantageusement, la manoeuvre est réalisée aux abords de l'apoapside 105. Sur une orbite elliptique, l'apoapside est le point où le satellite a la vitesse la plus faible. C'est à cet endroit que la manoeuvre consomme le moins de carburant. Il est donc préférable d'initier le changement d'orbite lorsque le satellite est proche de ce point par exemple quelques degrés avant ou après ce point.

Avantageusement, le procédé comporte, en outre, une étape de détermination d'une manoeuvre permettant au satellite 101 de retourner à la première orbite 103, le satellite comprenant une réserve de carburant supplémentaire destinée à effectuer la manoeuvre permettant le retour à la première orbite 103.

Selon une caractéristique de l'invention, la vitesse du satellite sur l'orbite initiale étant définie par un premier vecteur vitesse comportant une direction, la manoeuvre permettant au satellite de rejoindre la seconde orbite 107 modifie la direction dans un plan perpendiculaire à l'axe des apsides 106.

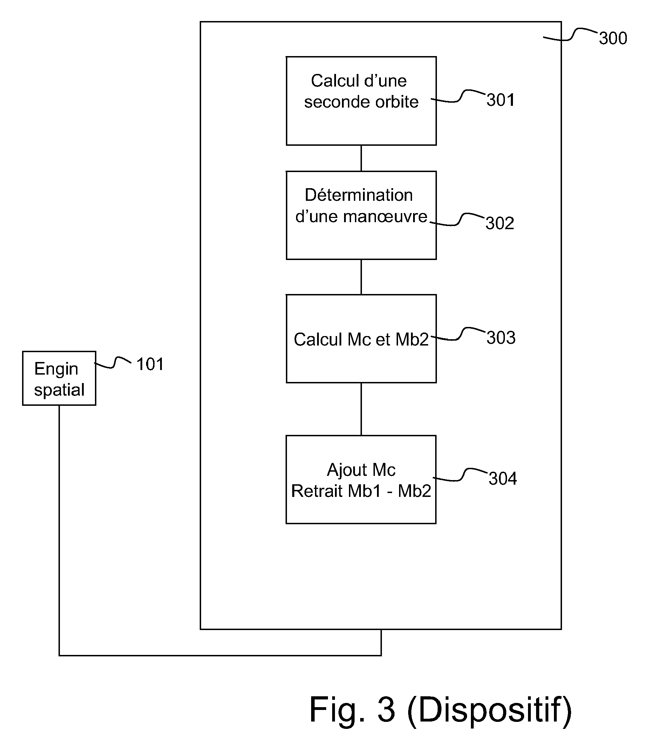

La figure 3 représente un exemple de mise en oeuvre du dispositif selon l'invention. Le dispositif 300 pour l'optimisation de la masse d'un satellite 101 destiné à une mission comportant une phase d'orbite autour d'un corps massif 102 le long d'une première orbite elliptique 103 dont la forme et l'orientation sont contraintes par une autre phase de la mission, la première orbite 103 comportant un premier point appelé périapside 104 et un deuxième point appelé apoapside 105, et étant associée à une première durée d'éclipse maximale D1, nécessitant une première masse de batterie Mb1 permettant de maintenir le satellite en fonctionnement pendant ladite première durée d'éclipse maximale D1, est comporte :
- des moyens 301 pour le calcul d'une seconde orbite elliptique 107 obtenue par rotation de la première orbite 103 autour d'un axe 106 reliant la périapside 104 et l'apoapside 105, la seconde orbite elliptique 107 étant associée à une seconde durée d'éclipse maximale D2 inférieure à la première durée d'éclipse maximale D1,
- des moyens 302 pour la détermination d'une manoeuvre permettant au satellite de rejoindre la seconde orbite 107, et
- des moyens pour le calcul 303 d'une deuxième masse de batterie Mb2 permettant de maintenir le satellite en fonctionnement pendant la deuxième durée d'éclipse maximale D2, et de calcul d'une masse de carburant Mc nécessaire pour effectuer la manoeuvre, la masse Mc de carburant étant ajouté au satellite et une masse de batterie équivalente à la différence entre la première Mb1 et la deuxième masse Mb2 de batterie étant retirée du satellite, la somme de la masse Mc de carburant et de la deuxième masse Mb2 de batterie étant inférieure la première Mb1 masse de batterie.

Avantageusement, le dispositif selon l'invention comprend en outre des moyens pour la détermination d'une manoeuvre permettant au satellite 101 de retourner à la première orbite 103, le satellite comprenant une réserve de carburant supplémentaire destinée à effectuer la manoeuvre permettant le retour à la première orbite 103.

Selon une variante de l'invention, les moyens 301 pour le calcul d'une seconde orbite 107 sont situés au sol.

Selon une autre variante de l'invention, les moyens 301 pour le calcul d'une seconde orbite 107 sont embarqués dans le satellite.

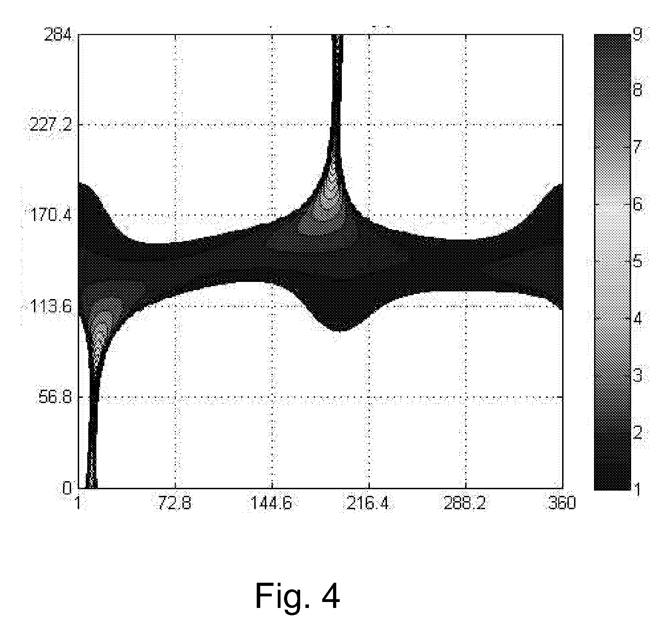

La figure 4 représente un exemple d'une éclipse de longue durée. Les niveaux de gris représentent la durée des éclipses en heures sur une orbite elliptique autour d'une planète en fonction de la géométrie d'insertion autour de la planète en degrés (B-plane angle, suivant l'axe des abscisses) et la durée passée sur l'orbite en jours (suivant l'axe des ordonnées).

## Revendications

1. Procédé pour l'optimisation de la masse d'un satellite (101) destiné à une mission comportant une phase d'orbite autour d'un corps massif (102) le long d'une première orbite elliptique (103) dont la forme et l'orientation sont contraintes par une autre phase de la mission, la première orbite (103) comportant un premier point appelé périapside (104) et un deuxième point appelé apoapside (105), et étant associée à une première durée d'éclipse maximale (D1) nécessitant une première masse de batterie (Mb1) permettant de maintenir le satellite en fonctionnement pendant ladite première durée d'éclipse maximale (D1), ledit procédé étant **caractérisé en ce qu'**il comporte :
- une étape (201) de calcul d'une seconde orbite (107) elliptique obtenue par rotation de la première orbite (103) autour d'un axe (106) reliant la périapside (104) et l'apoapside (105), la deuxième orbite elliptique (107) étant associée à une deuxième durée d'éclipse maximale (D2) inférieure à la première durée d'éclipse maximale (D1),
- une étape (202) de détermination d'une manoeuvre permettant au satellite de rejoindre la seconde orbite (107), et
- une étape de calcul (203) d'une deuxième masse de batterie (Mb2) permettant de maintenir le satellite en fonctionnement pendant la deuxième durée d'éclipse maximale (D2), et de calcul d'une masse de carburant (Mc) nécessaire pour effectuer la manoeuvre,
- l'ajout de la masse (Mc) de carburant au satellite et le retrait d'une masse de batterie équivalente à la différence entre la première (Mb1) et la deuxième masse (Mb2) de batterie, la somme de la masse (Mc) de carburant et de la deuxième masse (Mb2) de batterie étant inférieure la première (Mb1) masse de batterie.

2. Procédé pour l'optimisation de la masse d'un satellite (101) selon la revendication 1, **caractérisé en ce que** la manoeuvre est réalisée aux abords de l'apoapside (105).

3. Procédé pour l'optimisation de la masse d'un satellite (101) selon l'une des revendications précédentes, **caractérisé en ce qu'**il comprend en outre une étape de détermination d'une manoeuvre permettant au satellite (101) de retourner à la première orbite (103), le satellite comprenant une réserve de carburant supplémentaire destinée à effectuer la manoeuvre permettant le retour à la première orbite (103).

4. Procédé l'optimisation de la masse d'un satellite (101) selon l'une des revendications précédentes, **caractérisé en ce que** la vitesse de du satellite sur l'orbite initiale étant définie par un vecteur vitesse comportant une direction, la manoeuvre permettant au satellite de rejoindre la seconde orbite (107) modifie la direction du vecteur dans un plan perpendiculaire à l'axe des apsides (106).

5. Dispositif pour l'optimisation de la masse d'un satellite (101) destiné à une mission comportant une phase d'orbite autour d'un corps massif (102) le long d'une première orbite elliptique (103) dont la forme et l'orientation sont contraintes par une autre phase de la mission, la première orbite (103) comportant un premier point appelé périapside (104) et un deuxième point appelé apoapside (105), et étant associée à une première durée d'éclipse maximale (D1), nécessitant une première masse de batterie (Mb1) permettant de maintenir le satellite en fonctionnement pendant ladite première durée d'éclipse maximale (D1), ledit dispositif (300) étant **caractérisé en ce qu'**il comporte :
- des moyens adaptés (301) pour le calcul d'une seconde orbite elliptique (107) obtenue par rotation de la première orbite (103) autour d'un axe (106) reliant la périapside (104) et l'apoapside (105), la seconde orbite elliptique (107) étant associée à une seconde durée d'éclipse maximale (D2) inférieure à la première durée d'éclipse maximale (D1),
- des moyens adaptés (302) pour la détermination d'une manoeuvre permettant au satellite de rejoindre la seconde orbite (107), et
- des moyens adaptés pour le calcul (303) d'une deuxième masse de batterie (Mb2) permettant de maintenir le satellite en fonctionnement pendant la deuxième durée d'éclipse maximale (D2), et de calcul d'une masse de carburant (Mc) nécessaire pour effectuer la manoeuvre, la masse (Mc) de carburant étant ajouté au satellite et une masse de batterie équivalente à la différence entre la première (Mb1) et la deuxième masse (Mb2) de batterie étant retirée du satellite, la somme de la masse (Mc) de carburant et de la deuxième masse (Mb2) de batterie étant inférieure la première (Mb1) masse de batterie.

6. Dispositif pour l'optimisation de la masse d'un satellite (101) selon la revendication 5, **caractérisé en ce qu'**il comprend en outre des moyens adaptés pour la détermination d'une manoeuvre permettant au satellite (101) de retourner à la première orbite (103), le satellite comprenant une réserve de carburant supplémentaire destinée à effectuer la manoeuvre permettant le retour à la première orbite (103).

7. Dispositif pour l'optimisation de la masse d'un satellite (101) selon l'une des revendications 5 ou 6, **caractérisé en ce que** les moyens (301) adaptés pour le calcul d'une seconde orbite (107) sont situés au sol.

8. Dispositif pour l'optimisation de la masse d'un satellite (101) selon l'une des revendications 5 ou 6, **caractérisé en ce que** les moyens (301) adaptés pour le calcul d'une seconde orbite (107) sont embarqués dans le satellite.

## Patentansprüche

1. Verfahren zum Optimieren der Masse eines Satelliten (101), der für eine Mission bestimmt ist, die eine Phase des Umlaufens um einen massiven Körper (102) entlang einer ersten elliptischen Umlaufbahn (103) umfasst, deren Form und Orientierung durch eine andere Phase der Mission begrenzt werden, wobei die erste Umlaufbahn (103) einen ersten Punkt (104), Periapsis genannt, und einen zweiten Punkt (105), Apoapsis genannt, umfasst und mit einer ersten maximalen Verdunkelungsdauer (D1) assoziiert ist, die eine erste Batteriemasse (Mb1) erfordert, so dass der Satellit während der ersten maximalen Verdunkelungsdauer (D1) in Betrieb gehalten werden kann, wobei das Verfahren **dadurch gekennzeichnet ist, dass** es Folgendes beinhaltet:
- einen Schritt (201) des Berechnens einer zweiten elliptischen Umlaufbahn (107), erhalten durch Rotation der ersten Umlaufbahn (103) um eine Achse (106), die die Periapsis (104) und die Apoapsis (105) verbindet, wobei die zweite elliptische Umlaufbahn (107) mit einer zweiten maximalen Verdunkelungsdauer (D2) assoziiert ist, die kürzer ist als die erste maximale Verdunkelungsdauer (D1);
- einen Schritt (202) des Bestimmens eines Manövers, das es zulässt, dass der Satellit die zweite Umlaufbahn (107) erreicht; und
- einen Schritt (203) des Berechnens einer zweiten Batteriemasse (Mb2), die es zulässt, den Satelliten während der zweiten maximalen Verdunkelungsdauer (D2) in Betrieb zu halten, und des Berechnens einer Brennstoffmasse (Mc), die zum Durchführen des Manövers benötigt wird;
- Hinzufügen der Brennstoffmasse (Mc) dem Satelliten und Abziehen einer Batteriemasse äquivalent zur Differenz zwischen der ersten (Mb1) und der zweiten (Mb2) Batteriemasse, wobei die Summe aus der Brennstoffmasse (Mc) und der zweiten Batteriemasse (Mb2) niedriger ist als die erste Batteriemasse (Mb1).

2. Verfahren zum Optimieren der Masse eines Satelliten (101) nach Anspruch 1, **dadurch gekennzeichnet, dass** das Manöver in der Nähe der Apoapsis (105) durchgeführt wird.

3. Verfahren zum Optimieren der Masse eines Satelliten (101) nach einem der vorherigen Ansprüche, **dadurch gekennzeichnet, dass** es ferner einen Schritt des Bestimmens eines Manövers beinhaltet, das es zulässt, dass der Satellit (101) wieder zur ersten Umlaufbahn (103) zurückkehrt, wobei der Satellit eine zusätzliche Brennstoffreserve umfasst, um zu bewirken, dass er das Manöver durchführt, das die Rückkehr zur ersten Umlaufbahn (103) zulässt.

4. Verfahren zum Optimieren der Masse eines Satelliten (101) nach einem der vorherigen Ansprüche, **dadurch gekennzeichnet, dass**, da die Geschwindigkeit des Satelliten auf der Anfangsumlaufbahn durch einen eine Richtung umfassenden Geschwindigkeitsvektor definiert wird, das Manöver, das es zulässt, dass der Satellit die zweite Umlaufbahn (107) erreicht, die Richtung des Vektors in einer Ebene senkrecht zur Achse (106) der Apsiden ändert.

5. Vorrichtung zum Optimieren der Masse eines Satelliten (101), die für eine Mission bestimmt ist, die eine Phase des Umlaufens um einen massiven Körper (102) entlang einer ersten elliptischen Umlaufbahn (103) umfasst, deren Form und Orientierung durch eine andere Phase der Mission begrenzt werden, wobei die erste Umlaufbahn (103) einen ersten Punkt (104), Periapsis genannt, und einen zweiten Punkt (105), Apoapsis genannt, umfasst und mit einer ersten maximalen Verdunkelungsdauer (D1) assoziiert ist, die eine erste Batteriemasse (Mb1) erfordert, die es zulässt, dass der Satellit während der ersten maximalen Verdunkelungsdauer (D1) in Betrieb gehalten wird, wobei die Vorrichtung (300) **dadurch gekennzeichnet ist, dass** sie Folgendes umfasst:
- Mittel (301) zum Berechnen einer zweiten elliptischen Umlaufbahn (107), die durch Rotation der ersten Umlaufbahn (103) um eine Achse (106) erhalten wird, die die Periapsis (104) und die Apoapsis (105) verbindet, wobei die zweite elliptische Umlaufbahn (107) mit einer zweiten maximalen Verdunkelungsdauer (D2) assoziiert ist, die kürzer ist als die erste maximale Verdunkelungsdauer (D1);
- Mittel (302) zum Bestimmen eines Manövers, das es zulässt, dass der Satellit die zweite Umlaufbahn (107) erreicht; und
- Mittel (303) zum Berechnen einer zweiten Batteriemasse (Mb2), die es zulässt, dass der Satellit während der zweiten maximalen Verdunkelungsdauer (D2) in Betrieb gehalten wird, und zum Berechnen einer Brennstoffmasse (Mc), die zum Durchführen des Manövers benötigt wird, wobei die Brennstoffmasse (Mc) zu dem Satelliten hinzugefügt wird, und eine Batteriemasse, die mit der Differenz zwischen der ersten (Mb1) und der zweiten (Mb2) Batteriemasse äquivalent ist, vom Satelliten abgezogen wird, wobei die Summe aus der Brennstoffinasse (Mc) und der zweiten Batteriemasse (Mb2) niedriger ist als die erste Batteriemasse (Mb1).

6. Vorrichtung zum Optimieren der Masse eines Satelliten (101) nach Anspruch 5, **dadurch gekennzeichnet, dass** sie ferner geeignete Mittel zum Bestimmen eines Manövers umfasst, das es zulässt, dass der Satellit (101) zur ersten Umlaufbahn (103) zurückkehrt, wobei der Satellit eine zusätzliche Brennstoffreserve umfasst, um zu bewirken, dass er das Manöver durchführt, das es zulässt, zur ersten Umlaufbahn (103) zurückzukehren.

7. Vorrichtung zum Optimieren der Masse eines Satelliten (101) nach Anspruch 5 oder 6, **dadurch gekennzeichnet, dass** sich die Mittel (301) zum Berechnen einer zweiten Umlaufbahn (107) am Boden befinden.

8. Vorrichtung zum Optimieren der Masse eines Satelliten (101) nach Anspruch 5 oder 6, **dadurch gekennzeichnet, dass** die Mittel (301) zum Berechnen einer zweiten Umlaufbahn (107) sich an Bord des Satelliten befindet.

## Claims

1. A method for optimising the mass of a satellite (101) intended for a mission comprising a phase of orbiting around a massive body (102) following a first elliptical orbit (103), the shape and orientation of which are limited by another phase of said mission, said first orbit (103) comprising a first point (104), called periapsis, and a second point (105), called apoapsis, and being associated with a first maximum eclipse duration (D1) requiring a first battery mass (Mb1) that allows said satellite to keep operating during said first maximum eclipse duration (D1), said method being **characterised in that** it comprises:
- a step (201) of computing a second elliptical orbit (107) obtained as a result of the rotation of said first orbit (103) about an axis (106) connecting said periapsis (104) and said apoapsis (105), said second elliptical orbit (107) being associated with a second maximum eclipse duration (D2) that is shorter than said first maximum eclipse duration (D1);
- a step (202) of determining a manoeuvre that allows said satellite to reach said second orbit (107); and
- a step (203) of computing a second battery mass (Mb2) that allows said satellite to keep operating during said second maximum eclipse duration (D2) and of computing a fuel mass (Mc) that is required for carrying out said manoeuvre;
- with said fuel mass (Mc) being added to said satellite and a battery mass equivalent to the difference between said first (Mb1) and said second (Mb2) battery mass being removed, the sum of said fuel mass (Mc) and of said second battery mass (Mb2) being lower than said first battery mass (Mb1).

2. The method for optimising the mass of a satellite (101) according to claim 1, **characterised in that** said manoeuvre is carried out in the vicinity of said apoapsis (105).

3. The method for optimising the mass of a satellite (101) according to any one of the preceding claims, **characterised in that** it further comprises a step of determining a manoeuvre that allows said satellite (101) to return to said first orbit (103), said satellite comprising an additional fuel reserve intended to be used in order to carry out the manoeuvre that allows said first orbit (103) to be regained.

4. The method for optimising the mass of a satellite (101) according to any one of the preceding claims, **characterised in that**, with the speed of said satellite on said initial orbit being defined by a speed vector comprising a direction, said manoeuvre that allows said satellite to reach said second orbit (107) changes the direction of said vector in a plane perpendicular to the axis (106) of the apsides.

5. A device for optimising the mass of a satellite (101) intended for a mission comprising a phase of orbiting around a massive body (102) following a first elliptical orbit (103), the shape and orientation of which are limited by another phase of said mission, said first orbit (103) comprising a first point (104), called periapsis, and a second point (105), called apoapsis, and being associated with a first maximum eclipse duration (D1) requiring a first battery mass (Mb1) that allows said satellite to keep operating during said first maximum eclipse duration (D1), said device (300) being **characterised in that** it comprises:
- means (301) adapted for computing a second elliptical orbit (107) obtained as a result of the rotation of said first orbit (103) about an axis (106) connecting said periapsis (104) and said apoapsis (105), said second elliptical orbit (107) being associated with a second maximum eclipse duration (D2) that is shorter than said first maximum eclipse duration (D1);
- means (302) adapted for determining a manoeuvre that allows said satellite to reach said second orbit (107); and
- means (303) adapted for computing a second battery mass (Mb2) that allows said satellite to keep operating during said second maximum eclipse duration (D2) and for computing a fuel mass (Mc) that is required for carrying out said manoeuvre, with said fuel mass (Mc) being added to said satellite and a battery mass equivalent to the difference between said first (Mb1) and said second (Mb2) battery mass being removed from said satellite, the sum of said fuel mass (Mc) and of said second battery mass (Mb2) being lower than said first battery mass (Mb1).

6. The device for optimising the mass of a satellite (101) according to claim 5, **characterised in that** it further comprises means adapted for determining a manoeuvre that allows said satellite (101) to return to said first orbit (103), said satellite comprising an additional fuel reserve intended to be used in order to carry out the manoeuvre that allows said first orbit (103) to be regained.

7. The device for optimising the mass of a satellite (101) according to any one of claims 5 or 6, **characterised in that** said means (301) adapted for computing a second orbit (107) are ground-based.

8. The device for optimising the mass of a satellite (101) according to any one of claims 5 or 6, **characterised in that** said means (301) adapted for computing a second orbit (107) are on board said satellite.
